(19) Europäisches Patentamt
European Patent Office
Office européen des brevets

(11) **EP 2 352 059 B1**

(12) **EUROPEAN PATENT SPECIFICATION**

(45) Date of publication and mention
of the grant of the patent:
**01.11.2017 Bulletin 2017/44**

(51) Int Cl.:
*G02F 1/13363* (2006.01)  *G02F 1/1335* (2006.01)
*C09J 133/06* (2006.01)  *G02B 5/30* (2006.01)
*C08L 33/10* (2006.01)  *C08J 5/18* (2006.01)

(21) Application number: **09829340.0**

(22) Date of filing: **27.11.2009**

(86) International application number:
**PCT/KR2009/007036**

(87) International publication number:
**WO 2010/062133 (03.06.2010 Gazette 2010/22)**

(54) **RETARDATION FILM, METHOD OF MANUFACTURING THE SAME, AND A LIQUID-CRYSTAL DISPLAY DEVICE COMPRISING THE SAME**

VERZÖGERUNGSFILM, DESSEN HERSTELLUNGSVERFAHREN UND FLÜSSIGKRISTALLANZEIGEVORRICHTUNG DAMIT

FILM DE RETARD, SA MÉTHODE DE FABRICATION ET DISPOSITIF D'AFFICHAGE À CRISTAUX LIQUIDES LE COMPRENANT

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.11.2008 KR 20080119610**

(43) Date of publication of application:
**03.08.2011 Bulletin 2011/31**

(73) Proprietor: **LG Chem, Ltd.**
**Youngdungpo-gu**
**Seoul 150-721 (KR)**

(72) Inventors:
• **CHUN, Byoung-Kue**
**Daejeon 305-755 (KR)**
• **HAN, Chang-Hun**
**Daejeon 305-805 (KR)**

• **KANG, Byoung-Il**
**Daejeon 305-340 (KR)**
• **KIM, Su-Kyung**
**Daejeon 302-120 (KR)**
• **SUNG, Da-Eun**
**Daejeon 305-340 (KR)**

(74) Representative: **Goddar, Heinz J. et al**
**Boehmert & Boehmert**
**Anwaltspartnerschaft mbB**
**Pettenkoferstrasse 22**
**80336 München (DE)**

(56) References cited:
**EP-A1- 1 788 007**    **WO-A1-2006/098138**
**WO-A1-2007/108363**    **WO-A2-2004/098865**
**JP-A- H05 306 344**    **JP-A- 2008 009 378**
**JP-A- 2008 146 003**    **KR-A- 20070 020 233**
**KR-A- 20080 004 720**

**Description**

[Technical Field]

The present invention provides a retardation film that has excellent heat resistance and optical transparency, low haze, is not easily broken, and has excellent mechanical strength and durability, a method for manufacturing the same, and a liquid crystal display device comprising the retardation film.

This application claims priority from Korean Patent Application No. 10-2008-0119610 filed on November 28, 2008 in the KIPO.

[Background Art]

Recently, display technologies using various methods such as a plasma display panel (PDP), a liquid crystal display (LCD) and the like that are used instead of a known brown tube in accordance with the development of optical technologies are suggested and sold. The higher properties of the polymer material for displays are required. For example, in the case of the liquid crystal display, according to the development toward the thin film, the lightness, and enlargement of the screen area, the wide viewing angle, the high contrast, the suppression of change in image color tone according to the viewing angle and the uniformity of the screen display are particularly considered as important problems.

Therefore, various polymer films such as a polarizing film, a polarizer protective film, a retardation film, a plastic substrate, a light guide plate and the like are used, and various modes of liquid crystal displays such as twisted nematic (TN), super twisted nematic (STN), vertical alignment (VA), in-plane switching (IPS) liquid crystal cells are developed. Since these liquid crystal cells have all intrinsic liquid crystal alignment, the intrinsic optical anisotropic property is ensured, and in order to compensate the optical anisotropic property, a film in which a retardation function is provided by stretching various kinds of polymers has been suggested.

In detail, since a liquid crystal display device uses high birefringence property and alignment of liquid crystal molecules, the birefringences are different according to the viewing angle and thus the color and brightness of the picture are changed. For example, since most liquid crystal molecules that are used in a vertical alignment manner have the positive thickness retardation, in order to compensate this, a compensation film that has the negative thickness retardation is required. In addition, light does not pass through the front sides of two polarizing plates that are vertical to each other, but if the angle is inclined, the light axes of two polarizing plates are not vertical to each other, thus light leakage occurs. In order to compensate this, the compensate film that has the in-plane retardation is required. In addition, the display device using the liquid crystal requires both the thickness retardation compensation and the in-plane retardation compensation in order to widen the angle view.

It is required that the birefringence is easily controlled in order to satisfy the conditions of the retardation compensation film. However, the film birefringence is a basic birefringence which belongs to the material and is formed by the alignment of polymer chains in the film. The alignment of the polymer chains is mostly forcibly performed by force applied from the outside or is caused by the intrinsic properties of the material, and the alignment method of the molecules by the external force is to uniaxially or biaxially stretch the polymer film.

In the related art, there is a need to develop a polymer material that satisfies the above requirement properties in order to be used in displays.

[Disclosure]

[Technical Problem]

It is an object of the present invention to provide a retardation film in which an in-plane retardation and a thickness retardation of the film may be controlled through a stretching method, a film that has excellent optical properties and optical transparency may be manufactured, a disadvantage of an acryl-based film that is easily broken through stretching alignment may be solved, processability is excellent, and durability such as heat resistance is excellent.

It is another object of the present invention to provide a method for manufacturing a retardation film and a liquid crystal display device that comprises the retardation film.

[Technical Solution]

The present invention provides a retardation film as recited in claim 1. The present invention further provides a method for manufacturing a retardation film as recited in appended claim 9. The method may further comprise uniaxially or biaxially stretching the film.

In addition, the present invention provides a liquid crystal display device that comprises one or more retardation films.

[Advantageous Effects]

In a retardation film according to the present invention, an optical property is excellent, optical transparency is excellent, and mechanical properties, processability, heat resistance, and retardation implement property are excellent. In addition, the optical film according to the present invention is characterized in that it has a low photoelastic coefficient in comparison with a known retardation film, polarizer protective film, for example, TAC film.

[Best Mode]

A retardation film according to the present invention comprises a blend resin of 1) an acryl-based copolymer resin that consists of methyl methacrylate and cyclohexyl methacrylate, and 2) a polycarbonate-based resin that comprises an aromatic ring or aliphatic ring in its polymer main chain.

In the retardation film according to the present invention, the contents of methyl methacrylate and cyclohexyl methacrylate in 1) acryl-based copolymer resin may be selected from the range of 0.1 to 99.9 wt%, respectively. In particular, the contents of methyl methacrylate is preferably in the range of 70 to 99.9 wt% and the contents of cyclohexyl methacrylate is preferably in the range of 0.1 to 30 wt %.

1) the acryl-based copolymer resin may further comprise the styrene-based monomer such as styrene, alpha-methyl styrene.

In the retardation film according to the present invention, it is preferable that the content of 1) acryl-based copolymer resin in the blend resin is in the range of 60 to 99 wt%, and the content of 2) the polycarbonate-based resin that comprises aromatic ring or aliphatic ring in its polymer main chain is in the range of 1 to 40 wt%, and it is more preferable that the content of 1) acryl-based copolymer resin in the blend resin is in the range of 70 to 99 wt%, and the content of the 2) polycarbonate-based resin that comprises the aromatic ring or aliphatic ring in its polymer main chain is in the range of 1 to 30 wt%.

In the retardation film according to the present invention, the glass transition temperature of the blend resin is preferably 100°C or more and more preferably 115°C or more. In addition, the weight average molecular weight of the blend resin is preferably in the range of 40,000 to 200,000 in views of heat resistance, sufficient processability, productivity and the like.

The thickness of the retardation film according to the present invention is preferably in the range of 20 to 200 $\mu$m and more preferably 40 to 140 $\mu$m, but is not limited thereto.

It is preferable that the retardation film according to the present invention has the in-plane retardation value that is represented by the following Equation 1 and is in the range of 30 to 80 nm and the thickness retardation value that is represented by the following Equation 2 and is in the range of 50 to -200 nm.

$$[\text{Equation 1}]$$

$$R_{in} = (n_x - n_y) \times d$$

$$[\text{Equation 2}]$$

$$R_{th} = (n_z - n_y) \times d$$

In Equations 1 and 2,

$n_x$ is the refractive index in the direction in which the refractive index is highest in respects to the plane of the film,
$n_y$ is the refractive index in the transverse direction in respects to $n_x$ in the plane of the film,
$n_z$ is the refractive index in the direction of the thickness,
d is the thickness of the film.

The manufacturing method according to the present invention comprises the steps of 1) preparing a blend resin composition that comprises an acryl-based copolymer resin consisting of methyl methacrylate and cyclohexyl methacrylate, and a polycarbonate-based resin that comprises an aromatic ring or aliphatic ring in its polymer main chain; and 2) molding the film by using the resin composition. The method for manufacturing the retardation film may further comprise uniaxially or biaxially stretching the film.

Since the detailed description of the acryl-based copolymer resin, and the polycarbonate-based resin that comprises the aromatic ring or aliphatic ring in its polymer main chain is the same as the above description, it will be omitted.

In the method for manufacturing the retardation film according to the present invention, the resin composition of the step 1) may be manufactured by melting and mixing the above components. The melt mixing of the components may be carried out by using a solution cast method, an extrusion method and the like.

In the method for manufacturing the retardation film according to the present invention, it is more preferable that the film is manufactured by using a solution cast method and a stretching process is carried out.

In addition, in some cases, it is possible to implement the extrusion method by adding a reforming agent.

The resin composition may further comprise an antioxidant, a UV stabilizing agent, heat stabilizing agent and the like, which are generally used in the art.

The manufacturing method of the retardation film according to the present invention may further comprise the step of uniaxially or biaxially stretching the film. The stretching process may be carried out by using any one of a longitudinal direction (MD) stretching and a transverse direction (TD) stretching or both of the longitudinal direction stretching and the transverse direction stretching. In the case of when both of the longitudinal direction stretching and the transverse direction stretching are carried out, any one of them may be first carried out and then the other may be carried out, or both of them may be carried out simultaneously. The stretching may be carried out through a single step or through multisteps. In the case of when the stretching is carried out in the longitudinal direction, the stretching may be carried out by using a difference in speed between rolls, and in the case of when the stretching is carried out in the transverse direction, the tenter may be used. The rail initiating angle of the tenter is 10° or less, a bowing phenomenon that occurs when the transverse direction stretching is carried out is suppressed, and the angle of the optical axis is regularly controlled. By carrying out the transverse direction stretching through multisteps, the suppression phenomenon of the bowing phenomenon may be obtained.

The stretching may be carried out at a temperature in the range of (Tg - 20°C) to (Tg + 30°C) when the glass transition temperature of the resin composition is Tg. The glass transition temperature means a range from a temperature at which storage elasticity of the resin composition starts to be reduced and the loss elasticity starts to be larger than the storage elasticity to a temperature at which alignment of the polymer chain is loosened and removed. The glass transition temperature may be measured by using a differential scanning calorimeter (DSC). It is more preferable that the temperature in the stretching process is the glass transition temperature of the film.

In the case of a small stretching machine (Universal testing machine, Zwick Z010), it is preferable that the stretching rate is in the range of 1 to 100 mm/min. In the case of a pilot stretching machine, it is preferable that the stretching rate is in the range of 0.1 to 2 mm/min. In addition, it is preferable that the film is stretched by using a stretching ratio in the range of 5 to 300%.

The optical film according to the present invention may control a retardation property by uniaxially or biaxially being stretched by using the above-mentioned method.

In addition, the present invention provides a liquid crystal display device that comprises one or more retardation films.

It is preferable that the liquid crystal display device is a VA (vertical alignment) mode liquid crystal display device.

The optical film according to the present invention is characterized in that it has a low photoelastic coefficient in comparison with a known retardation film, polarizer protective film, for example, TAC film.

In the VA mode liquid crystal display device, a retardation film may be used in compensation of a viewing angle, and has two elements for compensation. First, in the case of when a liquid crystal display is inclinedly observed, there is a light leakage compensation that is caused by the fact that absorption axes of two polarizing plates are not orthogonal each other in an appearance, and second, in the case of when a VA cell is inclinedly observed, there is a compensation that is required when the contrast is reduced when light leakage occurs due to the cell while a black color is shown by increasing the birefringence of the liquid crystal molecule.

Since a polarizer that is combined with a retardation film comprises a dichromic pigment and consists of a polyvinyl alcohol film that is uniaxially stretched, it is very weak and has the reduced durability in respects to the temperature or moisture, and laminated with the protective film. If the retardation film is capable of directly being attached to the polarizer instead of the protective film, a retardation film integral polarizing film that comprises one layer of thin protective film is capable of being obtained.

Since a cellulose derivative has excellent transparency, in the production process of the polarizing plate, there is an advantage in that the moisture that is comprised in the polarizer is capable of being volatilized through the film. However, under the high temperature and high humidity atmosphere, the dimensional change according to the absorption or the optical property change is relatively significant and in the case of when the humidity is changed at around room temperature, a change in retardation value is large, and there is a limit in improvement of the stable angle view, thus there is a problem in that the durability of the optical property of the polarizing plate is reduced.

In addition, in a polycarbonate system, since the glass transition temperature is high, the stretching process is required at high temperatures, and since the light elasticity-coefficient of the film is large, light deformation occurs by the stress. The solving of the above problems is capable of being solved by adopting the acryl-based retardation film that has the excellent angle view compensation effect and a small change in retardation value even though the environment is changed.

A liquid crystal display device that comprises one or more retardation films will be described in detail below.

In a liquid crystal display device that comprises a liquid crystal cell and a first polarizing plate and a second polarizing plate provided on both sides of the liquid crystal cell, the retardation film may be provided between the liquid crystal cell and the first polarizing plate and/or the second polarizing plate. That is, one or more retardation films may be provided between the first polarizing plate and the liquid crystal cell, between the second polarizing plate and the liquid crystal cell, or between the first polarizing plate and the liquid crystal cell and between the second polarizing plate and the liquid crystal cell.

The first polarizing plate and the second polarizing plate may comprise a protective film on a side or both sides thereof. As the inner protective film, there may be a triacetate cellulose (TAC) film, a polynorbornene film that is manufactured by using the ring opening metathesis polymerization (ROMP), a HROMP (ring opening metathesis polymerization followed by hydrogenation) polymer film that is obtained by hydrogenating again the ring opened cyclic olefin polymer, a polyester film, or a polynorbornene film that is manufactured by using the addition polymerization, and the like. In addition to this, a film that is made of a transparent polymer material may be used as the protective film, but it is not limited thereto.

In addition, a polarizing film is comprised in the present invention, and the present invention provides an integrated polarizing plate comprising a retardation film according to the present invention as the protective film on one side or both sides of the polarizing film.

If the retardation film according to the present invention is provided on only one side of the polarizing film, a protective film which is known in the related art may be provided on another side thereof.

As the polarizing film, a film that comprises polyvinyl alcohol (PVA) comprising iodine or dichromatic dye may be used. The polarizing film may be manufactured by dyeing iodine or dichromatic dye on the PVA film, but its manufacturing method is not particularly limited. In the specification, the polarizing film does not comprise the protective film, and the polarizing plate comprises the polarizing film and the protective film.

In the integrated polarizing plate according to the present invention, the protective film and the polarizing film may be combined with each other by using a method known in the art.

For example, the combination of the protective film and the polarizing film may be performed according to an attachment method using an attaching agent. That is, the attaching agent is applied on the surface of the PVA film that is the protective film of the polarizing film or the polarizing film by using a roll coater, a gravure coater, a bar coater, a knife coater, a capillary coater, or the like. Before the attaching agent is completely dried, the protective film and the polarizing film are combined with each other using heat pressing or pressing at normal temperature by means of a combination roll. In the case of when the hot melt attaching agent is used, the heating pressing roll should be used.

Examples of the attaching agent which is capable of being used to combine the protective film and the polarizing plate comprise, but are not limited to a one- or two-liquid type PVA attaching agent, a polyurethane attaching agent, an epoxy attaching agent, a styrene-butadiene rubber (SBR) attaching agent, or a hot melt attaching agent. In the polyurethane attaching agent is used, it is preferable to use a polyurethane attaching agent that is manufactured by using an aliphatic isocyanate compound that is not yellowed by light. In the case of when an attaching agent for one component or two component dry laminate or an attaching agent that has relatively low reactivity to isocyanate and hydroxyl group is used, a solution adhesion agent that is diluted by an acetate solvent, a ketone solvent, an ether solvent or an aromatic solvent may be used. At this time, it is preferable that the attaching agent is a low viscosity type having the viscosity of 5,000 cps or less. The above attaching agent has excellent storage stability, and it is preferable that the light transmittance of them at 400 to 800 nm is 90% or more.

If an adhesion agent has sufficient adhesion strength, it may be used as the adhesion agent. It is preferable that the adhesion agent is sufficiently cured by heat or UV and mechanical strength is improved to the level of the case of attaching agent, and surface attachment strength is large, such that it has adhesion strength so that it is not stripped as long as any one of both films to which the adhesion agent is attached is damaged.

Specific examples of the adhesive may comprise natural rubber, synthetic rubber, or elastomer, a vinyl chloride/vinyl acetate copolymer, polyvinyl alkyl ether, polyacrylate, denatured polyolefin adhesive, and a curable adhesive containing a curing agent such as isocyanate, which have excellent optical transparency.

In addition, the present invention provides a liquid crystal display comprising the integrated polarizing plate.

In the case of when the liquid crystal display according to the present invention comprises the integrated polarizing plate, one or more retardation films according to the present invention may be additionally provided between the polarizing plate and the liquid crystal cell.

[Mode for Invention]

Hereinafter, the present invention will be described in detail. However, the following Examples are set forth to illustrate the present invention, but the scope of the present invention is not limited thereto.

<Example>

<Example 1>

The resin was manufactured by using 90 parts by weight of the copolymer of methyl methacrylate (80 parts by weight) and cyclohexyl methacrylate (20 parts by weight) and 10 parts by weight of polycarbonate. The glass transition temperature and the molecular weight of the manufactured resin were measured, and as a result thereof, the resin that had the glass transition temperature of 122°C and the molecular weight of 110,000 was obtained. From this resin, the film was manufactured by using the solution casting method, and stretched at the glass transition temperature, and the retardation value of the film was measured. As a result, the in-plane retardation value/thickness retardation values were 37 nm/-75 nm.

<Example 2>

The resin was manufactured by using 90 parts by weight of the copolymer of methyl methacrylate (90 parts by weight) and cyclohexyl methacrylate (10 parts by weight) and 10 parts by weight of polycarbonate. The glass transition temperature and the molecular weight of the manufactured resin were measured, and as a result thereof, the resin that had the glass transition temperature of 121°C and the molecular weight of 130,000 was obtained. From this resin, the film was manufactured by using the solution casting method, and stretched at the glass transition temperature, and the retardation value of the film was measured. As a result, the in-plane retardation value/thickness retardation values were 32 nm/-64 nm.

<Comparative Example 1>

The experiment was carried out by using the same method as Experimental Example 1, except that the resin was manufactured by using 90 parts by weight of the copolymer of methyl methacrylate (80 parts by weight) and phenyl methacrylate (20 parts by weight) and 10 parts by weight of polycarbonate. As a result thereof, the resin that had the glass transition temperature of 120°C and the molecular weight of 100,000 was obtained. From this resin, the film was manufactured by using the solution casting method, and stretched at the glass transition temperature, and the retardation value of the film was measured. As a result, the in-plane retardation value/thickness retardation values were 10 nm/-20 nm.

<Comparative Example 2>

The experiment was carried out by using the same method as Experimental Example 1, except that the resin was manufactured by using 90 parts by weight of the copolymer of methyl methacrylate (80 parts by weight) and cyclohexyl acrylate (20 parts by weight) and 10 parts by weight of polycarbonate. However, since compatibility between two resins was insufficient, the blend resin was not obtained.

<Comparative Example 3>

The experiment was carried out by using the same method as Experimental Example 1, except that the resin was manufactured by using 90 parts by weight of the copolymer of methyl methacrylate (80 parts by weight) and phenoxyethyl acrylate (20 parts by weight) and 10 parts by weight of polycarbonate. However, since compatibility between two resins was insufficient, the blend resin was not obtained.

<Comparative Example 4>

The experiment was carried out by using the same method as Experimental Example 1, except that the resin was manufactured by using 90 parts by weight of the copolymer of methyl methacrylate (80 parts by weight) and 3,3,5-trimethylcyclohexyl methacrylate (20 parts by weight) and 10 parts by weight of polycarbonate. However, since compatibility between two resins was insufficient, the blend resin was not obtained.

[TABLE 1]

| | MMA (parts by weight) | acryl-based (parts by weight) | acryl-based resin (parts by weight) | PC (parts by weight) | Miscibility | Tg (°C) | Mw | $R_{in}$ (nm) | $R_{th}$ (nm) |
|---|---|---|---|---|---|---|---|---|---|
| Example 1 | 80 | CHMA 20 | 90 | 10 | ○ | 122 | 110,000 | 37 | -75 |
| Example 2 | 90 | CHMA 10 | 90 | 10 | ○ | 121 | 130,000 | 32 | -64 |
| Comparative Example 1 | 80 | PhMA 20 | 90 | 10 | ○ | 120 | 100,000 | 10 | -20 |
| Comparative Example 2 | 80 | CHA 20 | 90 | 10 | × | - | - | - | - |
| Comparative Example 3 | 80 | PhEA 20 | 90 | 10 | × | - | - | - | - |
| Comparative Example 4 | 80 | MCHM 20 | 90 | 10 | × | - | - | - | - |
| MMA: methyl methacrylate<br>CHMA: cyclohexyl methacrylate<br>PhMA: phenyl methacrylate<br>CHA: cyclohexyl acrylate<br>PhEA: 2-phenoxyethyl acrylate<br>MCHM: 3,3,5-trimethylcyclohexyl methacrylate | | | | | | | | | |

(1) weight average molecular weight (Mw): The manufactured resin was dissolved in tetrahydrofurane and measured by using the gel permeation chromatography (GPC).

(2) glass transition temperature (Tg): The measurement was carried out by using DSC (Differential Scanning Calorimeter) manufactured by TA Instrument, Co., Ltd.

(3) retardation value ($R_{in}/R_{th}$): After the film was stretched at the glass transition temperature, the measurement was carried out by using AxoScan manufactured by Axometrics, Co., Ltd.

From the results of Table 1, it can be seen that the retardation film according to the present invention has excellent optical property, optical transparency, mechanical properties, processability, heat resistance, and retardation implement property.

## Claims

1. A retardation film comprising:

   a blend resin of

   1) an acryl-based copolymer resin which is a copolymer resin consisting of methyl methacrylate and cyclohexyl methacrylate and
   2) a polycarbonate-based resin comprising an aromatic ring or aliphatic ring in the main chain of the polycarbonate-based resin.

2. The retardation film according to claim 1, wherein 1) the acryl-based copolymer resin comprises 70 to 99.9 wt% of the methyl methacrylate and 0.1 to 30 wt% of the cyclohexyl methacrylate.

3. The retardation film according to claim 1, wherein 1) the acryl-based copolymer resin further comprises a styrene-based monomer.

**4.** The retardation film according to claim 1, wherein the content of 1) acryl-based copolymer resin in the blend resin is in the range of 60 to 99 wt% and the content of 2) the polycarbonate-based resin is in the range of 1 to 40 wt%.

**5.** The retardation film according to claim 1, wherein the weight average molecular weight of the blend resin is in the range of 40,000 to 200,000.

**6.** The retardation film according to claim 1, wherein the thickness of the retardation film is in the range of 20 to 200 $\mu$m.

**7.** The retardation film according to claim 1, wherein the in-plane retardation value of the retardation film that is represented by the following Equation 1 is in the range of 30 to 80 nm and the thickness retardation value that is represented by the following Equation 2 is in the range of -50 to -200 nm.

$$[\text{Equation 1}]$$

$$R_{in} = (n_x - n_y) \times d$$

$$[\text{Equation 2}]$$

$$R_{th} = (n_z - n_y) \times d$$

wherein

$n_x$ is the refractive index in the direction in which the refractive index is highest in respects to the plane of the film,
$n_y$ is the refractive index in the transverse direction in respects to nx in the plane of the film,
$n_z$ is the thickness retardation,
d is the thickness of the film.

**8.** The retardation film according to claim 1, wherein the glass transition temperature of the blend resin is 100°C or more.

**9.** A method of manufacturing a retardation film, the method comprising the steps of:

1) preparing a blend resin composition that comprises an acryl-based copolymer resin consisting of methyl methacrylate and cyclohexyl methacrylate, and a polycarbonate-based resin comprising an aromatic ring or aliphatic ring in the main chain of the polycarbonate-based resin; and
2) molding the film by using the resin composition.

**10.** The method of manufacturing a retardation film according to claim 9, further comprising uniaxially or biaxially stretching the film.

**11.** A liquid crystal display device comprising one or more retardation films according to any one of claims 1 to 8.

**Patentansprüche**

**1.** Verzögerungsfilm, umfassend
eine Harzmischung aus

1) einem Copolymerharz auf Acrylbasis, welches ein Copolymerharz bestehend aus Methylmethacrylat und Cyclohexylmethacrylat ist, und
2) ein Harz auf Polycarbonatbasis, umfassend einen aromatischen Ring oder aliphatischen Ring in der Hauptkette des Harzes auf Polycarbonatbasis.

**2.** Verzögerungsfilm nach Anspruch 1, wobei 1) das Copolymerharz auf Acrylbasis 70 bis 99,9 Gew.-% des Methylmethacrylats und 0,1 bis 30 Gew.-% des Cyclohexylmethacrylats umfasst.

**3.** Verzögerungsfilm nach Anspruch 1, wobei 1) das Copolymerharz auf Acrylbasis ferner ein Monomer auf Styrolbasis umfasst.

**4.** Verzögerungsfilm nach Anspruch 1, wobei der Gehalt von 1) dem Copolymerharz auf Acrylbasis in der Harzmischung im Bereich von 60 bis 99 Gew.-% und der Gehalt von 2) des Harzes auf Polycarbonatbasis im Bereich von 1 bis 40 Gew.-% ist.

**5.** Verzögerungsfilm nach Anspruch i, wobei das Gewichtsmittelmolekulargewicht der Harzmischung im Bereich von 40.000 bis 200.000 ist.

**6.** Verzögerungsfilm nach Anspruch 1, wobei die Dicke des Verzögerungsfilms im Bereich von 20 bis 200 $\mu$m ist.

**7.** Verzögerungsfilm nach Anspruch 1, wobei der In-Ebene-Verzögerungswert des Verzögerungsfilms, der durch die folgende Gleichung 1 dargestellt ist, im Bereich von 30 bis 80 nm ist, und der Dickenverzögerungswert, der durch die folgende Gleichung 2 dargestellt ist, im Bereich von -50 bis -200 nm ist:

$$[\text{Gleichung 1}]$$

$$R_{in} = (n_x - n_y) \times d$$

$$[\text{Gleichung 2}]$$

$$R_{th} = (n_z - n_y) \times d,$$

wobei

$n_x$ der Brechungsindex in der Richtung ist, in der der Brechungsindex in Bezug auf die Ebene des Films am höchsten ist,
$n_y$ der Brechungsindex in der Querrichtung in Bezug auf $n_x$ in der Ebene des Films ist,
$n_z$ die Dickenverzögerung ist,
d die Dicke des Films ist.

**8.** Verzögerungsfilm nach Anspruch 1, wobei die Glasübergangstemperatur der Harzmischung 100°C oder höher ist.

**9.** Verfahren zum Herstellen eines Verzögerungsfilms, wobei das Verfahren die Schritte umfasst:

1) Herstellen einer Harzmischungszusammensetzung, die ein Copolymerharz auf Acrylbasis bestehend aus Methylmethacrylat und Cyclohexylmethacrylat und ein Harz auf Polycarbonatbasis, umfassend einen aromatischen Ring oder aliphatischen Ring in der Hauptkette des Harzes auf Polycarbonatbasis, umfasst; und
2) Formen des Films durch Verwendung der Harzzusammensetzung.

**10.** Verfahren zum Herstellen eines Verzögerungsfilms nach Anspruch 9, weiter umfassend ein monoaxiales oder biaxiales Strecken des Films.

**11.** Flüssigkristallanzeigevorrichtung, umfassend einen oder mehrere Verzögerungsfilme nach einem der Ansprüche 1 bis 8.

**Revendications**

**1.** Film de retard comprenant :

une résine mélangée constituée

1) d'une résine copolymère à base d'acryle qui est une résine copolymère constituée de méthacrylate de méthyle et de méthacrylate de cyclohexyle et
2) d'une résine à base de polycarbonate comprenant un cycle aromatique ou un cycle aliphatique dans la chaîne principale de la résine à base de polycarbonate.

2. Film de retard selon la revendication 1, dans lequel 1) la résine copolymère à base d'acryle comprend 70 à 99,9 % en poids du méthacrylate de méthyle et 0,1 à 30 % en poids du méthacrylate de cyclohexyle.

3. Film de retard selon la revendication 1, dans laquelle 1) la résine copolymère à base d'acryle comprend en outre un monomère à base de styrène.

4. Film de retard selon la revendication 1, dans laquelle la teneur en 1) résine copolymère à base d'acryle dans la résine mélangée se situe dans la plage de 60 à 99 % en poids et la teneur en 2) résine à base de polycarbonate se situe dans la plage de 1 à 40 % en poids.

5. Film de retard selon la revendication 1, dans laquelle le poids moléculaire moyen en poids de la résine mélangée se situe dans la plage de 40.000 à 200.000.

6. Film de retard selon la revendication 1, dans laquelle l'épaisseur du film de retard se situe dans la plage de 20 à 200 μm.

7. Film de retard selon la revendication 1, dans lequel la valeur de retard dans le plan du film de retard qui est représentée par l'équation 1 suivante se situe dans la plage de 30 à 80 nm et la valeur de retard dans la direction d'épaisseur qui est représentée par l'équation 2 suivante se situe dans la plage de -50 à -200 nm.

[Équation 1]

$$R_{in} = (n_x - n_y) \times d$$

[Équation 2]

$$R_{th} = (n_z - n_y) \times d$$

dans lesquelles équations

$n_x$ représente l'indice de réfraction dans la direction dans laquelle l'indice de réfraction est le plus élevé par rapport au plan du film,
$n_y$ représente l'indice de réfraction dans la direction transversale par rapport à nx dans le plan du film,
$n_z$ représente le retard dans la direction d'épaisseur,
d représente l'épaisseur du film.

8. Film de retard selon la revendication 1, dans lequel la température de transition vitreuse de la résine en mélange est de 100 °C ou supérieure.

9. Procédé de fabrication d'un film de retard, le procédé comprenant les étapes consistant à :

1) préparer une composition de résine mélangée qui comprend une résine copolymère à base d'acryle constituée d'un méthacrylate de méthyle et d'un méthacrylate de cyclohexyle, et d'une résine à base de polycarbonate comprenant un cycle aromatique ou un cycle aliphatique dans la chaîne principale de la résine à base de polycarbonate ; et
2) mouler le film en utilisant la composition de résine.

10. Procédé de fabrication d'un film de retard selon la revendication 9, comprenant en outre un étirage uniaxial ou biaxial du film.

11. Dispositif d'affichage à cristaux liquides comprenant un ou plusieurs films de retard selon l'une quelconque des revendications 1 à 8.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020080119610